(19) **Europäisches Patentamt**
**European Patent Office**
**Office européen des brevets**

(11) **EP 3 297 341 B1**

(12) **EUROPEAN PATENT SPECIFICATION**

(45) Date of publication and mention of the grant of the patent:
**27.05.2020 Bulletin 2020/22**

(51) Int Cl.:
*H04W 52/34* *(2009.01)*      *H04W 16/14* *(2009.01)*
*H04W 52/32* *(2009.01)*      *H04W 72/04* *(2009.01)*

(21) Application number: **16848695.9**

(22) Date of filing: **23.09.2016**

(86) International application number:
**PCT/JP2016/078119**

(87) International publication number:
**WO 2017/051907 (30.03.2017 Gazette 2017/13)**

(54) **WIRELESS BASE STATION, USER TERMINAL, AND WIRELESS COMMUNICATION METHOD**

DRAHTLOSE BASISSTATION, BENUTZERENDGERÄT UND DRAHTLOSKOMMUNIKATIONSVERFAHREN

STATION DE BASE SANS FIL, TERMINAL D'UTILISATEUR ET PROCÉDÉ DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2015 JP 2015187526**

(43) Date of publication of application:
**21.03.2018 Bulletin 2018/12**

(60) Divisional application:
**20170081.2**

(73) Proprietor: **NTT DOCOMO, INC.**
**Chiyoda-ku**
**Tokyo 100-6150 (JP)**

(72) Inventors:
- **HARADA, Hiroki**
  **Tokyo 100-6150 (JP)**
- **NAGATA, Satoshi**
  **Tokyo 100-6150 (JP)**
- **WANG, Jing**
  **Beijing 100190 (CN)**
- **LIU, Liu**
  **Beijing 100190 (CN)**
- **JIANG, Huiling**
  **Beijing 100190 (CN)**

(74) Representative: **Hoffmann Eitle**
**Patent- und Rechtsanwälte PartmbB**
**Arabellastraße 30**
**81925 München (DE)**

(56) References cited:
- **QUALCOMM INCORPORATED: "Multi-carrier LBT operation", 3GPP DRAFT; R1-153868 MULTI-CARRIER LBT OPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001304, Retrieved from the Internet: URL:http://www.3gpp.org/ftp/Meetings_3GPP_ SYNC/RAN1/Docs/ [retrieved on 2015-08-23]**
- **QUALCOMM INCORPORATED: 'Multi-carrier operation for LAA' 3GPP TSG-RAN WG1#82 R1-153875, [Online] 15 August 2015, pages 2 - 4, XP051001311 Retrieved from the Internet: <URL:http://www.3gpp.org/ftp/tsg_ran/ WG1_RL1/TSGR1_82/Docs/R1-153875.zip> [retrieved on 2016-11-30]**
- **INTEL CORPORATION: 'On the dynamic power sharing among multiple LAA SCells for DL-only transmission' 3GPP TSG-RAN WG1#82 R1-154087, [Online] 15 August 2015, XP050993934 Retrieved from the Internet: <URL:http://www.3gpp.org/ftp/tsg_ran/ WG1_RL1/TSGR1_82/Docs/R1-154087.zip> [retrieved on 2016-11-30]**

**(Cont. next page)**

- **SAMSUNG: 'CCA threshold and transmission power for LAA' 3GPP TSG-RAN WG1#82 R1-154139, [Online] 15 August 2015, page 2, XP050994270 Retrieved from the Internet: <URL:http://www.3gpp.org/ftp/tsg_ran/ WG1_RL1/TSGR1_82/Docs/R1-154139.zip> [retrieved on 2016-11-30]**

**Description**

Technical Field

The present invention relates to a radio base station, a user terminal and a radio communication method in next-generation mobile communication systems.

Background Art

In the UMTS (Universal Mobile Telecommunications System) network, the specifications of long term evolution (LTE) have been drafted for the purpose of further increasing high speed data rates, providing lower delays and so on (see non-patent literature 1). The specifications of LTE-advanced (Rel. 10 to 12) have been drafted for the purpose of achieving further broadbandization and higher speeds beyond LTE, and, in addition, for example, a successor system of LTE -- referred to as "5G" (5th generation mobile communication system) -- is under study.

In LTE of Rel. 8 to 12, the specifications have been drafted assuming exclusive operations in frequency bands that are licensed to operatorsthat is, licensed bands. As licensed bands, for example, 800 MHz, 2 GHz and/or 1.7 GHz are used.

User traffic has been increasing steeply following the spread of high-performance user terminals/user equipment (referred to as "UE") such as smart-phones and tablets. Although more frequency bands need to be added to meet this increasing user traffic, licensed bands have limited spectra (licensed spectra). Consequently, a study is in progress to enhance the frequencies of LTE systems by using bands of unlicensed spectra (hereinafter referred to as "unlicensed bands") that are available for use apart from licensed bands (see non-patent literature 2). Also, non-patent literature 3 discloses dynamic maximum power allocation per carrier for each transmission best as a function of the number of carriers on which a base station chooses to transmit. Herein, power may be equally or variably allocated to multiple component carriers.

For unlicensed band, for example, 2.4 GHz, which is the same as in Wi-Fi (registered trademark), or the 5 GHz band and/or the like may be used. With Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). In the future, dual connectivity (DC) between licensed bands and unlicensed bands and stand-alone in unlicensed bands may become the subject of study under LAA.

Citation List

Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"

Non-Patent Literature 2: AT&T, Drivers, Benefits and Challenges for LTE in Unlicensed Spectrum, 3GPP TSG-RAN Meeting #62 RP-131701

Non-Patent Literature 3: QUALCOMM INCORPORATED: "Multi-carrier operation for LAA", 3GPP TSG-RAN WG1#82 RI-153875, 15 August 2015 (2015-08-15), pages 2-4

Summary of Invention

Technical Problem

When CA to bundle a plurality of component carriers (CCs) into one is executed by using the above unlicensed bands, the maximum transmission power is limited in all of the unlicensed bands regardless of the number of CCs used for transmission. Consequently, efficient transmission power operation is required when LAA radio base stations make transmissions by using a plurality of unlicensed band CCs.

The present invention has been made in view of the above, and it is therefore an object of the present invention to provide a radio base station, a user terminal and a radio communication method that enable efficient use of transmission power when making transmissions in LAA by using a plurality of unlicensed band component carriers.

Solution to Problem

The subject-matter is solved by the independent claims and the dependent claims describe further embodiments. According to one aspect of the present invention, a radio base station communicates with a user terminal by using a plurality of component carriers (CCs) in which listening is configured, and has a transmission section that transmits downlink (DL) signals in each CC, and a control section that controls the transmission of the DL signals in the each CC based on the result of listening in the plurality of CCs, and the control section controls the allocation of power based on the number of CCs that make transmission in each subframe after the listening. Advantageous Effects of Invention

According to the present invention, it is possible to use transmission power efficiently when making transmissions in LAA by using a plurality of unlicensed band component carriers.

Brief Description of Drawings

FIG. 1A and FIG. 1B provide diagrams, each illustrating an example of a radio frame configuration in LBT;
FIG. 2 is a diagram to illustrate examples of a burst period that is configured for transmission after DL-LBT;
FIG. 3 is a diagram to illustrate an example of a CSI measurement RS transmission method employing listening;
FIG. 4 is a diagram to explain the fluctuations of radio resource management (RRM) measurements results seen from the perspective of cell coverage in relation to user terminals;
FIG. 5 is a diagram to explain power allocation according to a first example of the present embodiment;
FIG. 6 is a diagram to explain power allocation according to the first example of the present embodiment;
FIG. 7 is a diagram to explain power allocation according to a second example of the present embodiment;
FIG. 8 is a diagram to explain power allocation according to the second example of the present embodiment;
FIG. 9 is a diagram to explain power allocation according to a third example of the present embodiment;
FIG. 10 is a diagram to explain power allocation according to the third example of the present embodiment;
FIG. 11 is a diagram to explain power allocation according to a fourth example of the present embodiment;
FIG. 12 is a diagram to explain power allocation according to the fourth example of the present embodiment;
FIG. 13 is a schematic diagram to illustrate an example of a radio communication system according to the present embodiment;
FIG. 14 is a diagram to explain an overall structure of a radio base station according to the present embodiment;
FIG. 15 is a diagram to explain a functional structure of a radio base station according to the present embodiment;
FIG. 16 is a diagram to explain an overall structure of a user terminal according to the present embodiment; and
FIG. 17 is a diagram to explain a functional structure of a user terminal according to the present embodiment.

Description of Embodiments

As mentioned earlier, in unlicensed bands, interference control functionality is necessary in order to allow co-presence with other operators' LTE, Wi-Fi (registered trademark), or different systems. In Wi-Fi, the function called "LBT" (Listen Before Talk), which is based on CCA (Clear Channel Assessment), is implemented as an interference control function for use within the same frequency. In Japan and Europe, the LBT function is stipulated as mandatory in systems that are run in the 5 GHz unlicensed band, such as Wi-Fi.

Consequently, a study is in progress to apply interference control within the same frequency by executing listening before transmitting signals even in systems where LTE/LET-A is run in unlicensed bands (for example, LAA systems). In a carrier in which listening is configured, radio base stations and user terminals of a plurality of systems may use the same frequency bands on a shared basis.

The application of listening makes it possible to prevent interference between LAA and Wi-Fi, interference between LAA systems, and so on. Furthermore, even when user terminals that can be connected are controlled independently for every operator that runs an LAA system, it is possible to reduce interference without learning the details of each operator's control, by means of listening.

Here, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT," "CCA," "carrier sensing" and so on. This listening can executed per CC that can be configured in the frequency band used.

For example, when LBT is employed in an LTE system, a transmission point (an LTE-U base station and/or a user terminal) performs listening (LBT, CCA) before transmitting UL (uplink) signals and/or DL (downlink) signals in an unlicensed band. Then, if no signals from other systems (for example, Wi-Fi) and/or other LAA transmission points are detected, the transmission point carries out communication in the unlicensed band.

If received power that is equal to or lower than a predetermined threshold is measured in LBT, the transmission point judges that the channel is in the idle state (LBT-idle), and carries out transmission. When a "channel is in the idle state," this means that, in other words, the channel is not occupied by a certain system, and it is equally possible to say that a channel is "idle," a channel is "clear," a channel is "free," and so on.

On the other hand, when the received power that is measured in LBT exceeds a predetermined threshold, the transmission point judges that the channel is in the busy state (LBT-busy), and limits transmission. Procedures that are taken when listening yields the result "LBT-busy" include (1) making a transition to another carrier by way of DFS (Dynamic Frequency Selection), (2) applying transmission power control (TPC), (3) holding transmission (stopping transmission or waiting for transmission), and so on. In the event LBT-busy is yielded, LBT is carried out again with respect to this channel, and the channel becomes available for use only after it is confirmed that the channel is in the idle state. Note that the method of judging whether a channel is in the idle state/busy state based on LBT is by no means limited to this.

For example, assume a case where, when a user terminal that communicates by using a carrier (which may also be referred to as a "frequency") of an unlicensed band detects another entity (another user terminal and/or the like) that is communicating in this unlicensed band carrier, transmission is banned in this carrier. In this case, this user terminal executes LBT at a timing that is a predetermined period ahead of a transmission timing. By executing LBT, the user terminal searches the whole band of the applicable carrier at a timing that is a predetermined period ahead of a transmission timing, and checks whether or not other devices (radio base stations, LAA-UEs, Wi-Fi devices and so on) are communicating in this carrier's band. Only if it is confirmed that no such communication is in progress, is transmission carried out using this carrier.

On the other hand, if only just a portion of the band is detected to be used by another device -- that is, if the received power of a signal from another device entering this band exceeds a threshold -- the user terminal stops its transmission. Here, if the received signal power in the LBT period is higher than a predetermined threshold, the channel is judged to be in the busy state (LBT-busy). If the received signal power in the LBT period is lower than the predetermined threshold, the channel is judged to be in the idle state (LBT-idle).

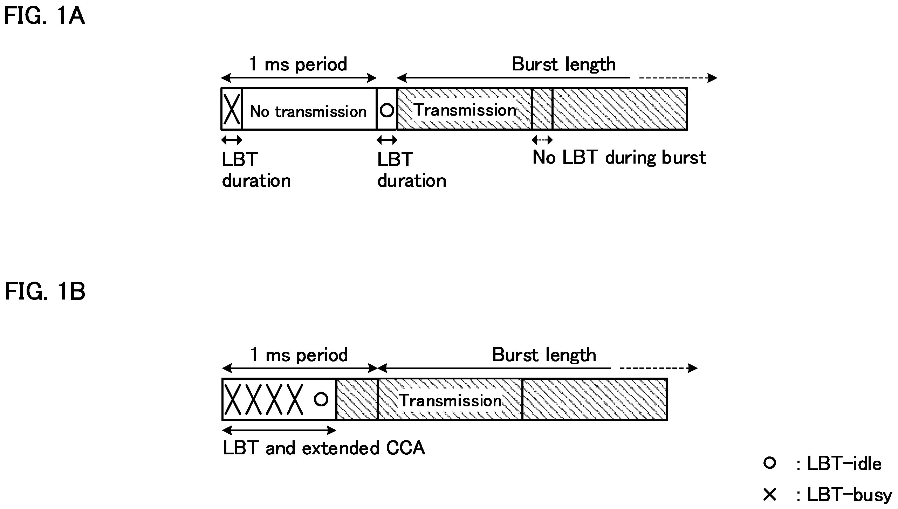

FIGs. 1 provide diagrams, each illustrating an example of a radio frame configuration in LBT. FIG. 1A illustrates an example of an FBE radio frame configuration. In the event of FBE, the LBT duration and the LBT cycle are fixed, and LBT is performed in a predetermined number of symbols (for example, one to three symbols) and a cycle (for example, every 1 ms). Meanwhile, FIG. 1B illustrates an example of an LBE radio frame configuration. In the event of LBE, the LBT duration is not fixed. For example, LBT symbols may continue until a predetermined condition is fulfilled. To be more specific, a radio base station may continue executing LBT until LBT-idle is observed.

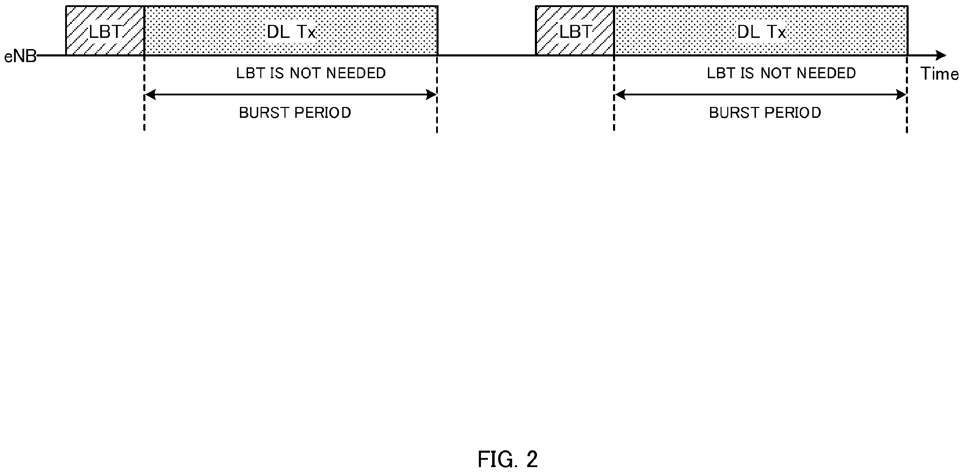

For example, when the result of listening for DL transmission (DL-LBT) which a radio base station executes illustrates LBT-idle, the radio base station is allowed to skip LBT and transmit signals for a predetermined period (see FIG. 2). FIG. 2 is a diagram to illustrate examples of a burst period that is configured in transmission after DL-LBT. In cells where listening is employed, the period after listening (after LBT-idle is yielded) in which transmission can be made without executing LBT is referred to as the "burst period" (also referred to as the "burst transmission period," "burst length," "maximum burst length," "maximum possible burst length" and so on). Also, data transmission in such burst periods will be referred to as "burst transmission." Consequently, even if referred to as "burst transmission," this is a group of transmissions that are sent out seamlessly in time, in response to one positive result of listening.

Also, when the result of listening for DL transmission illustrates LBT-idle, the radio base station the number of CCs to use for transmission in an unlicensed band. During the burst period, data transmission is made by using the determined the number of CCs.

Now, in Rel. 13 LTE, methods of measuring and reporting channel state information (CSI) in LAA are under study. In channel state information measurements and reporting, a user terminal (UE) measures the channel states of paths where signals transmitted from a radio base station to the user terminal travel, by measuring channel state information (measurement) reference signals that are transmitted from the radio base station (eNB) (including, for example, CSI-RSs (Channel State Information-Reference Signals), CRSs (Cell-specific Reference Signals) and so on). Also, the user terminal reports the channel state measurement results, measured based on the channel state information reference signals, to the radio base station. To be more specific, the user terminal receives the channel state information measurement reference signals transmitted from the radio base station, and, by using periodic or aperiodic reporting that is specified by the radio base station, the user terminal reports channel state information (CSI) to the radio base station. By this means, the radio base station can acquire channel state information about the paths between the radio base station and the user terminal. The radio base station controls the downlink data (DL data) to transmit to the user terminal based on the channel state information that is acquired.

In Rel. 13 LTE, an LAA cell may be used as a secondary cell (SCell). Here, to allow CSI measurements in an LAA cell where an SCell is employed, a radio base station transmits CSI measurement reference signals (for example, CSI-RSs) to a user terminal based on LBT. That is, a radio base station can transmit CSI measurement reference signals only after LBT is executed. Also, to report aperiodic CSI from a user terminal, a licensed carrier or an SCell to employ LAA (LAA SCell) is used.

As a method of transmitting RSs for CSI measurements in a cell where listening is employed, it may be possible to include CSI measurement RSs in other data transmission. For example, it may be possible to (A) use burst transmission in which CSI-RSs are multiplexed over DL data (for example, the PDSCH (Physical Downlink Shared Channel) (data burst including RSs for CSI measurements), or (B) use burst transmission in which CSI-RSs are multiplexed over DL DRSs (Discovery Reference Signals) (DL DRS burst including RSs for CSI measurements).

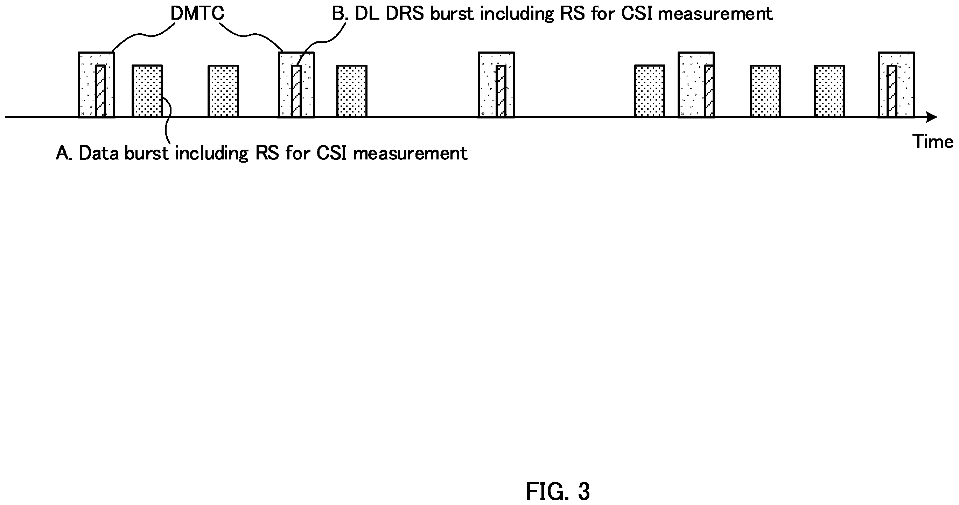

FIG. 3 illustrates an example of a CSI measurement RS transmission method to use LBT. FIG. 3 illustrates signals that are transmitted from a radio base station to a user terminal in chronological order. "A" and "B" in the drawings to be described below correspond to the above-described CSI-RS transmission methods (A) and (B). Also, "DMTC" indicates the MTC (Measurement Timing Configuration) for discovery, and DL DRSs including RSs for CSI measurements are transmitted from the radio base station within the range specified by the DMTC, and the user terminal receives the DL DRSs, including CSI measurement RSs, within this range. Also, the user terminal measures CSI based on, for example, information configured by the radio base station, and sends out periodic or aperiodic reports based on commands from the radio base station.

The radio base station can transmit the CSI measurement RSs, included in DL data, to the user terminal, by using the above-noted method of (A), and estimate channel states based on CSI transmitted from the user terminal. Furthermore, the radio base station can also transmit the CSI measurement RSs, included in DL DRSs, to the user terminal, by using the above-noted method of (B), and estimate channel states based on CSI transmitted from the user terminal.

Note that the signal for RRM measurements in LAA may be referred to as the "discovery measurement signal," the "discovery reference signal" (DRS), the "discovery signal" (DS), the "LAA DRS," the "LAA DS," and so on. Also, an unlicensed band SCell may be referred to as, for example, an LAA SCell. Similar to the Rel. 12 DRS, the DRS may be constituted by combining synchronization signals (PSS (Primary Synchronization Signal)/SSS (Secondary Synchronization Signal)) and CRSs (Cell-specific Reference Signals) of existing systems (for example, LTE Rel. 10 to 12), by combining synchronization signals (PSS/SSS), CRSs and CSI-RSs (Channel State Information Reference Signals) of existing systems, and so on.

Meanwhile, when, as mentioned earlier, CA to bundle of a plurality of CCs into one is executed by using unlicensed band, the maximum transmission power is determined in all unlicensed bands, regardless of the number of component carriers used for transmission. Consequently, it is possible to apply fixed (constant) power to each CC used in an unlicensed band, or it may be possible to, for example, divide the above maximum transmission power (maximum power resources) by the maximum the number of CCs that can be used in an unlicensed and define the resultant power as the transmission power (power resources) per CC. Nevertheless, these techniques still produce power resources that are not used, if, based on the result of above listening, the number of CCs used in burst transmission is smaller than the maximum the number of CCs that can be used in an unlicensed band.

Consequently, it may be possible to use dynamic power allocation (dynamic maximum power allocation), in each burst transmission, that allows the maximum transmission power to be allocated to (distributed among) all the CCs that are used. In other words, this is a technique to change the transmission power to allocate to CCs in each burst transmission. Nevertheless, to implement a technique like this, it is necessary to pay attention to the fluctuations of transmission power in each CC (also referred to as "power fluctuations"). For example, downlink reference signals include CRSs, CSI-RSs, DL DRSs, user-specific reference signals for use for demodulation (DM-RSs: Demodulation Reference Signals) and so on, and these reference signals are used in radio resource management measurements (RRM measurements), CSI measurements, the demodulation process and so on. If the transmission power of a CC fluctuates in varying burst periods, the reference signals transmitted in this CC mirror such fluctuations, and this may have an undesirable impact on RRM measurement results, CSI measurement results and the demodulation process.

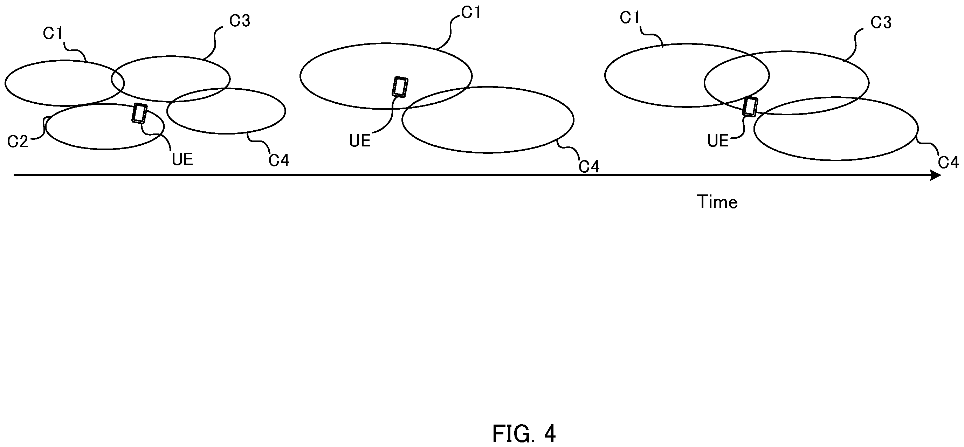

For example, seeing from the perspective of cell coverage in relation to a user terminal, if the results of RRM measurements fluctuate in the user terminal, this may make the user terminal unable to correctly understand in which coverage the user terminal is located. FIG. 4 illustrates locations in cell coverages which a user terminal UE detects every time CC transmission power fluctuates. The user terminal UE first judges that it is located in cell coverage C2, and, after the transmission power of the CCs change, judges that it is located in cell coverage C1. Furthermore, after the CCs' transmission power fluctuates the next time, the user terminal UE judges that it is located in cell coverage C3. The user terminal UE thus has to issue a request to demand a change of connection, report an event, and so on, every time the cell coverage where the user terminal UE is located changes. Furthermore, there is a possibility that the user terminal UE is unable to perform the demodulation process adequately, or unable to apply adequate link adaptation to downlink signal transmission in the connecting radio base station.

So, the present inventors have come up with the idea of allocating constant transmission power to predetermined signals (for example, at least to DRSs that pertain to RRM measurements) and allocating different power to the other signals. As for the reference signals for allocating constant transmission power, reference signals (DRSs, PSS/SSS, CRSs/CSI-RSs, etc.) to use in RRM measurements/CSI measurements may be used, or DRSs alone, which are used in RRM measurements, may be used. Signals apart from these predetermined reference signals are subject to dynamic power allocation. Also, to implement this technique, new approaches for L1 signaling and measurement operation in UEs (CSI measurement) are provided. In radio base station, a CSI recalculation process is provided, prior to link adaptation.

By this means, it becomes possible to allocate dynamic transmission power to CCs in unlicensed bands, and, since the measurement process, the demodulation process and so on are executed adequately, when LAA radio base stations make transmissions by using a plurality of unlicensed band component carriers, it is possible to manage predetermined transmission power efficiently.

Now, the present embodiment will be described in detail below with reference to the accompanying drawings. Although the following embodiment will be described assuming that a carrier where listening is configured is an unlicensed band, this is by no means limiting. The present embodiment is applicable to any carriers (or cells) in which listening is configured, regardless of whether a carrier is a licensed band or an unlicensed band.

Also, although examples will be described with the following description where listening for DL transmission is executed in radio base stations, this is by no means limiting. The present embodiment can be applied to any transmission points (for example, a user terminal) that employ listening. For example, the radio base stations in the following description are inter-changeable with user terminals. Also, although cases will be illustrated in the following description where listening is employed in LTE/LTE-A systems, the present embodiment is by no means limited to this. The present embodiment is applicable to any cases in which listening are executed before signals are transmitted and signals are transmitted according to the result of listening.

Also, reports to be sent from user terminals to radio base stations may be sent in aperiodic reporting or in periodic reporting. Furthermore, user terminals may send reports to radio base stations based on commands from the radio base stations.

(First Example)

Next, a first example according to the present embodiment will be explained. In this example, the power of reference signals for RRM measurements/CSI measurements is fixed semi-statically, and, furthermore, the power of data signals transmitted via the PDSCH is changed dynamically.

The reference signals for RRM measurements/CSI measurements are used as predetermined signals, the transmission power of these predetermined signals is fixed semi-statically. To be more specific, the power to allocate (distribute) to the reference signals for RRM measurements/CSI measurements is determined per CC used in an unlicensed band. Consequently, it is possible to prevent the power of reference signals from fluctuating in each CC due to the number of CCs used in unlicensed bands. Note that these reference signals are DRSs and reference signals (PSS/SSS, CRSs, CSI-RSs, etc.) not included in DRSs. The power of reference signals can be reported from radio base stations to user terminals, via, for example, higher layer signaling. The power of reference signals in each CC may be configured to be equal, or may be configured to be different.

Meanwhile, the power to allocate (distribute) to signals that relate to data transmission can be changed dynamically in every burst transmission depending on the number of CCs used. For example, it is possible to make the PDSCH, the (E)PDCCH and the DMRS allocation target signals. After the number of CCs to use is finalized based on listening, the power for reference signals is allocated in CCs that are used. The power that is left after subtracting the power allocated to the reference signals from the maximum power that is set forth in the unlicensed band is allocated (distributed) for data transmission.

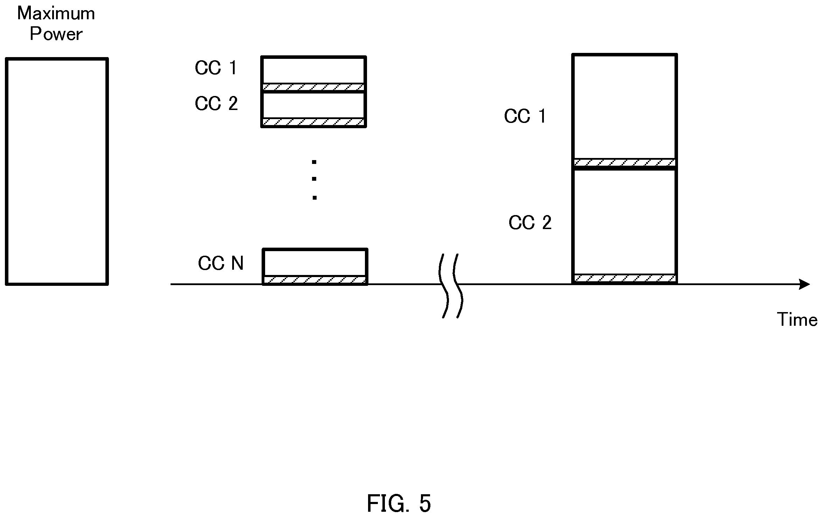

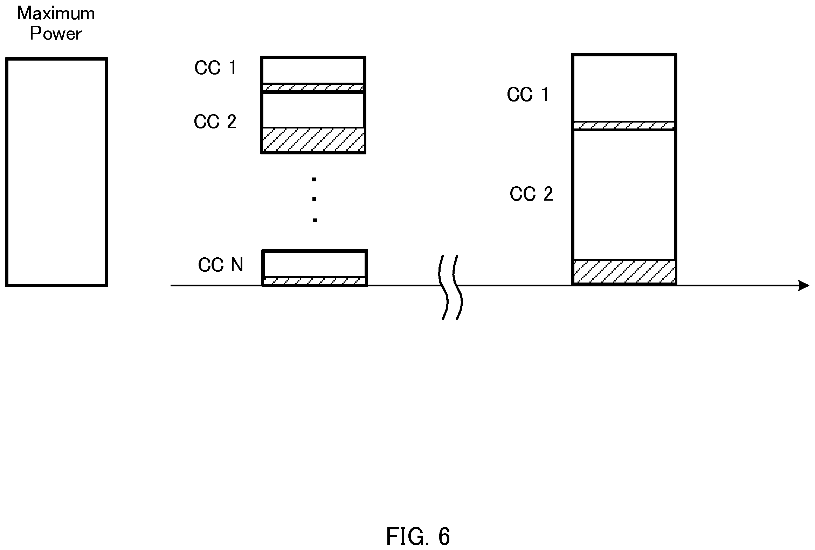

Here, the details of power allocation will be described with reference to FIG. 5 and FIG. 6. FIG. 5 is a diagram to explain the case where, when CCs are used in burst transmission, power is allocated evenly to both reference signals and data signals among the CCs, and FIG. 6 is a diagram to illustrate the case where the power that is allocated to reference signals and data signals varies among CCs (the case where a certain CC is allocated greater power).

Referring to FIG. 5, the block on the left represents the power that is allocated to (set forth in) an unlicensed band in advance (maximum transmission power) (for example, for one subframe). When the maximum number ("N") of CCs that can be used in the unlicensed band is determined based on listening, burst transmission is carried out in N CCs -- namely, CC1 to CCN (one subframe) -- as illustrated in the center part of FIG. 5. In this case, in each CC, predetermined power is allocated to the reference signals (hatched parts). Also, the power to allocate to the reference signals is configured to be equal among the CCs.

Following this, when the number of CCs is determined to be two (CC1 and CC2) based on listening, as illustrated with the block (one subframe) on the right in FIG. 5, the same power as the power allocated to each CC's reference signals upon the burst transmission by N CCs is allocated to the reference signals of CC1 and CC2 (hatched parts). Furthermore, the power that is left after subtracting the power allocated to the reference signals of CC1 and CC2 from the maximum transmission power allocated to the unlicensed band in advance is allocated to the data signals of CC1 and CC2. Note that, in the example illustrated in FIG. 5, the power to allocate to the data signals of CC1 and CC2 is configured (determined) to be equal. Based on power allocation like this, burst transmission is made from radio base stations to user terminals.

In FIG. 5, the allocation of power to the reference signals and the allocation of power to the data signals are configured to be equal in each CC. However, these allocations may be configured differently, for example, among a plurality of CCs. To be more specific, as illustrated in FIG. 6, a specific CC (CC2) alone may be configured to be allocated greater power than the other CCs. Such allocation may be applied when, for example, important data is transmitted in CC2. Note that, since FIG. 5 and FIG. 6 illustrate power allocation (power distribution) that presumes data transmission, the hatched parts represent the reference signals that are not included in DRSs. When DRSs are transmitted at periodic timings and multiplexed with data, after predetermined transmission power (predetermined power) is reserved for the DRSs, this transmission power is subtracted from the total transmission power, and the power that is left is allocated (distributed) to the reference signals that are not included in the DRSs, and to the data signals.

<L1 signaling>

Next, L1 signaling in this first example will be explained. As described above, according to the first example, the power of data signals is changed dynamically (may be changed per burst transmission). A user terminal needs to know the power of data signals after such changes in order to perform the demodulation process of DL signals. For example, when carrying out the PDSCH demodulation process based on CRSs (when demodulating signals modulated by modulation schemes such as 16QAM and 64QAM), a user terminal needs to have amplitude information in order to identify/decode each symbol. Consequently, this information needs to be reported to the user terminal, quickly, when the power allocation for data signals changes.

It is also possible to report power offset (the difference in power between CRSs and PDSCHs) to the user terminal via L1 signaling. For example, at least one of $P_A$, which is the PDSCH-CRS power ratio in symbols in which CRSs are not mapped, and $P_B$, which is the PDSCH-CRS power ratio in symbols in which CRSs are mapped, may be reported to the user terminal. Also, L1 signaling may be sent either in the Pcell (DCI) or in Scells (DCI or initial signaling).

<CSI measurement>

Next, CSI measurements in this first example will be explained. As described above, with the first example, the power to be allocated to DRSs is constant, so that RRM measurements, which are based on DRSs, illustrate no fluctuations. Similarly, the power to allocate to CRSs/CSI-RSs is also constant, and the channel portion of CSI illustrates no fluctuations either. Nevertheless, since the actual transmission power of data signals is not mirrored, there is a possibility that a radio base station is unable to use more adequate link adaptation. Consequently, the radio base station adjusts or re-calculates the channel portion of CSI based on the transmission power of data signals.

Also, it might occur that the power allocation of this first example is applied not only to the radio base stations to which a user terminal accesses, but is also applied to the radio base stations that form nearby cells. In this case, in nearby cells, too, the number of CCs used changes per burst transmission and the power that is allocated is changed per CC, and therefore the interference from nearby cells might also change. That is, the interference portion of CSI fluctuates.

Consequently, the user terminal measures interference in each burst transmission (each subframe), and sends a CSI report that illustrates the measurement result, without measuring an average measurement value across a plurality of burst transmissions. In other words, the user terminal reports an individual measurement value, which is not an average between a number of burst transmissions, in a single shot (one short), to the radio base station.

As described above, according to the first example, the power of reference signals for RRM measurements/CSI measurements is fixed semi-statically, and, furthermore, the power of data signals transmitted via the PDSCH is changed dynamically, so that, when an LAA radio base station makes transmissions by using a plurality of unlicensed band component carriers, it is possible to manage predetermined transmission power efficiently.

(Second Example)

Next, a second example according to the present embodiment will be explained. According to this example, the power of reference signals for RRM measurements/CSI measurements is fixed semi-statically, and, furthermore, the power of data signals transmitted via the PDSCH is changed dynamically, as in the above-described first example. However, regardless of the number of CCs that is determined based on the result of listening, considering the possibility of DRS transmission that might take place on other CCs, power is reserved for the reference signals of the CCs that are not used in burst transmission.

The same RRM measurement/CSI measurement reference signals as in the above first example are used as predetermined signals, and therefore description will be skipped. The signals that relate to data transmission are changed dynamically in every burst transmission, depending on the number of CCs used. For example, it is possible to make the PDSCH, the (E)PDCCH and the DMRS allocation target signals. After the number of CCs to use is finalized based on listening, as described earlier, the power for reference signals is allocated in CCs that are used. In addition, according to this second example, power is reserved for the reference signals of the CCs that are not used in burst transmission. The power that is left after subtracting the power allocated to these reference signals from the maximum power that is set forth in the unlicensed band is allocated for data transmission.

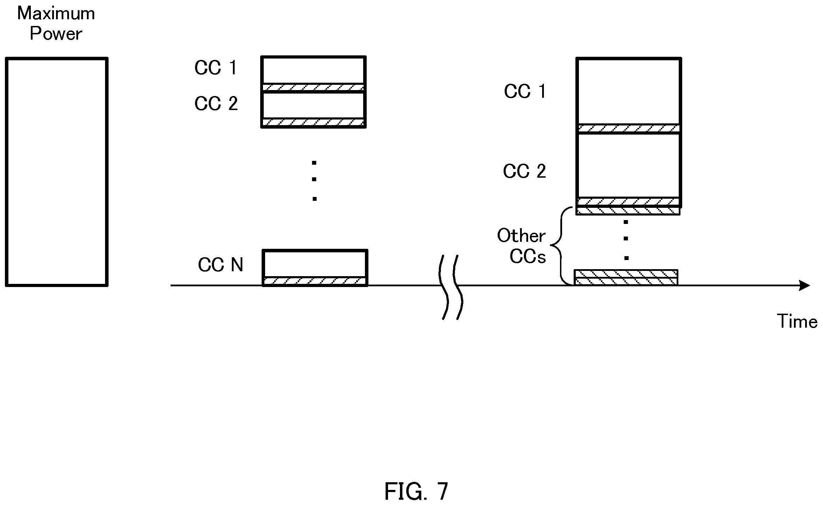

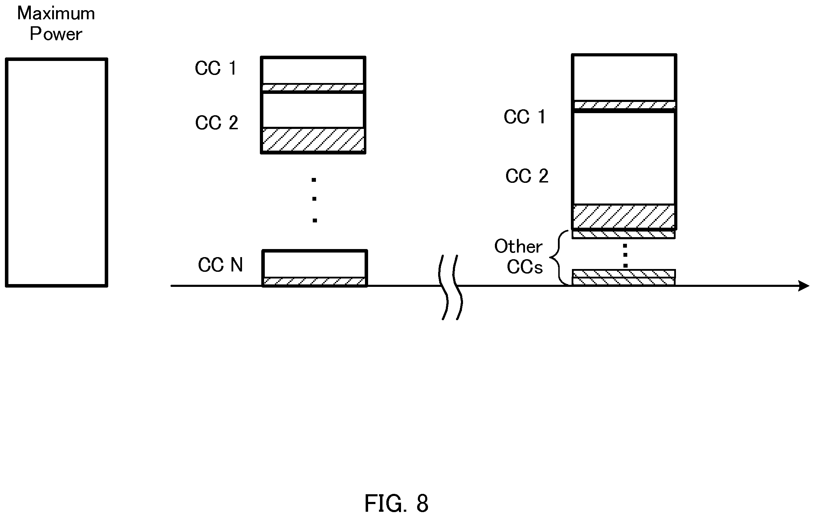

Now, the details of power allocation will be described with reference to FIG. 7 and FIG. 8. FIG. 7 is a diagram to explain the case where equal power is allocated to the reference signals in all CCs that can be used in an unlicensed band, and where equal power is allocated to the data signals of CCs used in burst transmission, and FIG. 8 is a diagram to explain the case where a specific CC is allocated greater power than the power allocated to the other CCs.

The blocks on the left and in the center part of FIG. 7 (one subframe each) are the same as those in FIG. 5 described above, and therefore description will be omitted. When the number of CC is determined to be two (CC1 and CC2) based on listening, As illustrated with the block (one subframe) on the right in FIG. 7, the same power as the power allocated to each CC's reference signals upon burst transmission by N CCs is allocated to the reference signals of CC1 and CC2 (hatched parts with backward slanting lines). Furthermore, predetermined power is reserved for the reference signals (DRS) of the other CCs than CC1 and CC2 (hatched parts with forward slanting lines). The power that is left after subtracting the power allocated to the reference signals of CC1 and CC2 (hatched parts with backward slanting lines) and the power that is allocated to the other CCs than CC1 and CC2 (hatched parts with forward slanting lines) from the maximum transmission power is allocated to the data signals of CC1 and CC2. Note that, in the example illustrated in FIG. 7, the power to allocate to the data signals of CC1 and CC2 is configured to be equal. Based on power allocation like this, burst transmission is made from radio base stations to user terminals.

In FIG. 7, the allocation of power to the reference signals and the allocation of power to the data signals are configured to be equal in each CC. However, these allocations may be configured differently, for example, among a plurality of CCs. To be more specific, as illustrated in FIG. 8, a specific CC (CC2) alone may be configured to be allocated greater power than the other CCs. Such allocation may be applied when, for example, important data is transmitted in CC2. Note that, since FIG. 7 and FIG. 8 illustrate power allocation (power distribution) that presumes data transmission, the hatched parts with backward slanting lines represent the reference signals that are not included in DRSs. When DRSs are transmitted at periodic timings and multiplexed with data, after predetermined transmission power (predetermined power) is reserved for the DRSs of the maximum number of CCs (N), this transmission power is subtracted from the total transmission power, and the power that is left is allocated (distributed) to the reference signals that are not included in the DRSs, and to the data signals, of the CCs that are not used in the burst transmission.

With this second example, <L1 signaling> and <CSI measurement>, which have been described above, are also the same as in the first example, and therefore description will be skipped. As described above, according to the first example, the power of reference signals for RRM measurements/CSI measurements is fixed semi-statically, and, furthermore, the power of data signals transmitted via the PDSCH is changed dynamically, so that, when an LAA radio base station makes transmissions by using a plurality of unlicensed band component carriers, it is possible to manage predetermined transmission power efficiently. Furthermore, to transmit DRSs in other CCs, it is possible to reserve power for the reference signals of the CCs that are not used in burst transmission.

(Third Example)

Next, a third example according to the present embodiment will be explained. In this example, only the power of DRSs, which are used in RRM measurements, is fixed semi-statically, and, furthermore, the power of data signals that are transmitted via the PDSCH and reference signals that are not included in DRSs is changed dynamically.

DRSs for RRM measurements are used as predetermined signals to allocate predetermined power. By this means, it is possible to prevent the power of DRSs from fluctuating, in each CC, due to the number of CCs used in an unlicensed band. The power to allocate to DRSs can be reported from radio base stations to user terminals, via, for example, higher layer signaling. The power of DRSs in each CC may be configured to be equal, or may be configured to be different.

Meanwhile, the power of signals that relate to data transmission and reference signals that are not included in DRSs (PSS/SSS, CRSs, CSI-RSs and so on) can be changed dynamically, in every burst transmission, depending on the number of CCs used. As for the signals that relate to data transmission, the PDSCH, the (E)PDCCH and the DMRS can be made allocation target signals. After the number of CCs to use is finalized based on listening, the power for predetermined signals is allocated in CCs that are used, as described earlier. The power that is left after subtracting the power configured for DRSs from the maximum power that is set forth in the unlicensed band is allocated to the data signals and to the reference signals not included in DRSs.

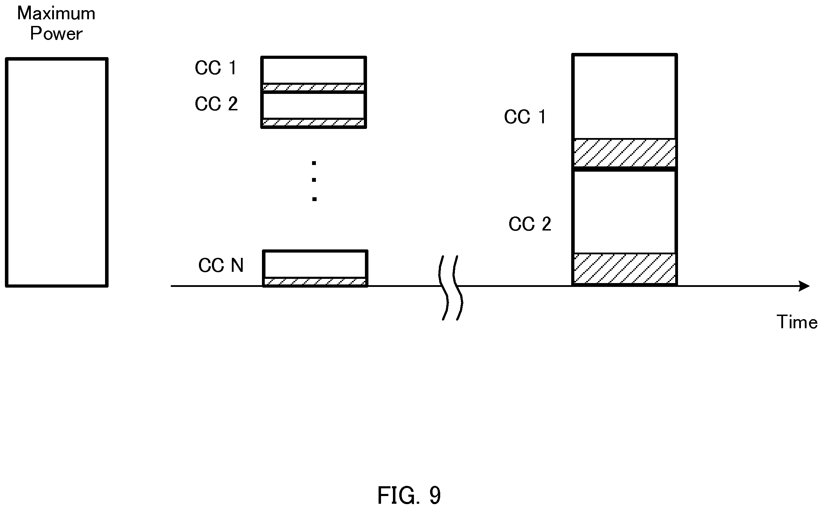

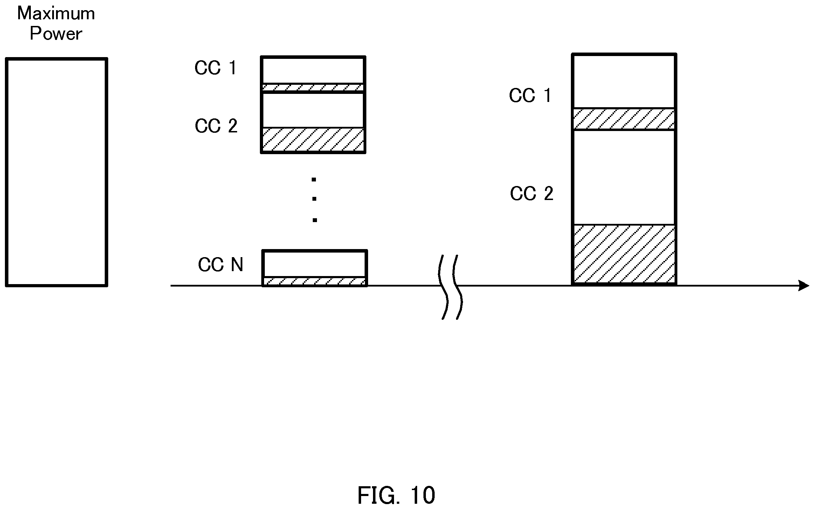

Now, the details of power allocation will be described with reference to FIG. 9 and FIG. 10. FIG. 9 is a diagram to explain the case where power is allocated equally between data signals and reference signals that are not included in DRSs, in CCs used in burst transmission, and FIG. 10 is a diagram to explain the case where power is allocated differently between data signals and reference signals that are not included in DRSs (where specific CCs are allocated greater power).

Referring to FIG. 9, the block on the left represents the power that is allocated to the unlicensed band in advance (maximum transmission power). When the maximum number ("N") of CCs that can be used in the unlicensed band is determined based on listening, the maximum transmission power is allocated to N CCs -- CC1 to CCN -- and burst transmission is carried out, as illustrated in the center part of FIG. 9. In this drawing, the power to allocate to the reference signals not included in DRSs and the power to allocate to the data signals are configured to be equal between CCs.

After this, when the number of CCs is determined to be two (CC1 and CC2) based on listening, the maximum transmission power is allocated to the data signals and the reference signals not included in DRSs, in CC1 and CC2 (the block on the right in FIG. 9). Note that, in the example illustrated in FIG. 9, the power to allocate to the data signals of CC1 and CC2 is configured to be equal. Furthermore, the power to allocate to the reference signals not included in DRSs is also configured to be equal between CC1 and CC2. Based on power allocation like this, burst transmission is made from radio base stations to user terminals.

In FIG. 9, the power to allocate to the reference signals not included in DRSs and the power to allocate to the data signals are configured to be equal between CCs. However, these allocations may be configured differently, for example, among a plurality of CCs. To be more specific, as illustrated in FIG. 10, a specific CC (CC2) alone may be configured to be allocated greater power than the other CCs. Such allocation may be applied when, for example, important data is transmitted in CC2. Note that, since FIG. 9 and FIG. 10 illustrate power allocation (power distribution) that presumes data transmission, the hatched parts represent the reference signals that are not included in DRSs. When DRSs are transmitted at periodic timings and multiplexed with data, after predetermined transmission power (predetermined power) is reserved for the DRSs, this transmission power is subtracted from the total transmission power, and the power that is left is allocated (distributed) to the reference signals that are not included in the DRSs, and to the data signals.

<L1 signaling >

Next, L1 signaling in this third example will be explained. As described above, according to the third example, the power of data signals and reference signals that are not included in DRSs is changed dynamically (may be changed per burst transmission). A user terminal needs to know amplitude information when performing the demodulation process. For example, when carrying out the PDSCH demodulation process based on CRSs (when demodulating signals modulated by modulation schemes such as 16QAM and 64QAM), a user terminal needs to have amplitude information in order to identify/decode each symbol. Consequently, this information needs to be reported to the user terminal, quickly, in link with changes in the power allocation for data signals.

It is also possible to report power offset (the difference in power between CRSs and PDSCHs) to the user terminal via L1 signaling. For example, at least one of $P_A$, which is the PDSCH-CRS power ratio in symbols in which CRSs are not mapped, $P_B$, which is the PDSCH-CRS power ratio in symbols in which CRSs are mapped, and "referenceSignalPower," which is cell-specific reference signal power information, may be reported to the user terminal. Also, L1 signaling may be sent either in the Pcell (DCI) or in Scells (DCI or initial signaling).

<CSI measurement >

Next, CSI measurements in this third example will be explained. As described above, with the third example, the power to be allocated to DRSs is constant, so that RRM measurements, which are based on DRSs, illustrate no fluctuations. By contrast with this, the power to allocate to CRSs/CSI-RSs changes, so that the CSI measurement results are also likely to fluctuate. Consequently, the user terminal measures both the channel portion and the interference portion in each burst transmission (or in a single measurement resource),and sends a CSI report that illustrates the measurement results, without measuring an average measurement value over a plurality of burst transmissions (or over a plurality of resources). In other words, the user terminal reports individual measurement values (the measurement values of the channel (signal) portion and the interference portion), which are not averaged, in a single shot (one short), to the radio base station.

As described above, according to the third example, the power of DRSs for RRM measurements is fixed semistatically, and, furthermore, the power of data signals transmitted via the PDSCH and reference signals not included in DRSs is changed dynamically, so that, when an LAA radio base station makes transmissions by using a plurality of unlicensed band component carriers, it is possible to manage predetermined transmission power efficiently.

(Fourth Example)

Next, a fourth example according to the present embodiment will be explained. According to this example, the power of DRSs for RRM measurements is fixed semi-statically, and, furthermore, the power of data signals transmitted via the PDSCH and reference signals not included in DRSs is changed dynamically. However, regardless of the number of CCs that is determined based on the result of listening, considering the possibility of DRS transmission that might take place on other CCs, power is reserved for the reference signals of the CCs that are not used in burst transmission.

The DRSs, which are used as predetermined signals, are the same as in the above-described third example, and therefore description will not be described. After the number of CCs to use is finalized based on listening, the power for reference signals is allocated in CCs that are used. Furthermore, with the fourth example, power for the DRSs of unused CCs and reference signals not included in DRSs. The power that is left after subtracting the power allocated to these reference signals from the maximum power that is set forth in the unlicensed band is allocated for data transmission and to the reference signals that are not included in the DRSs of the CCs that are used. Note that, for potential DRS transmission, it is equally possible to reserve power only for the DRSs of CCs that are not used.

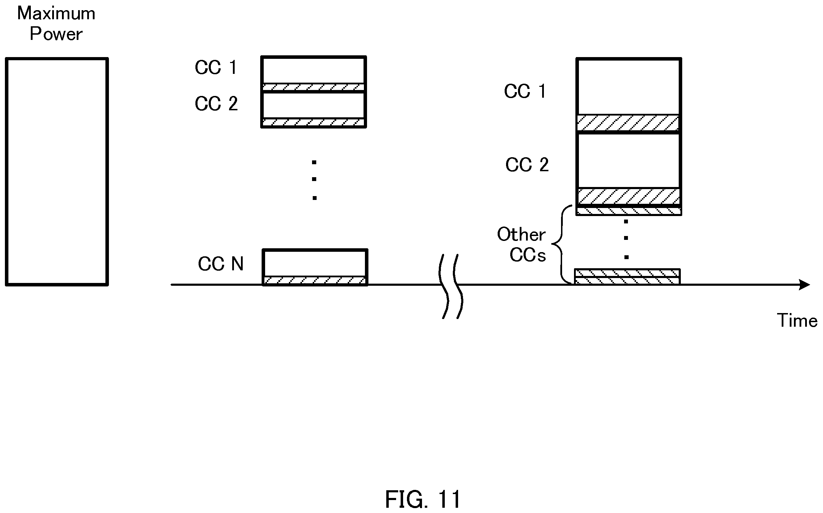

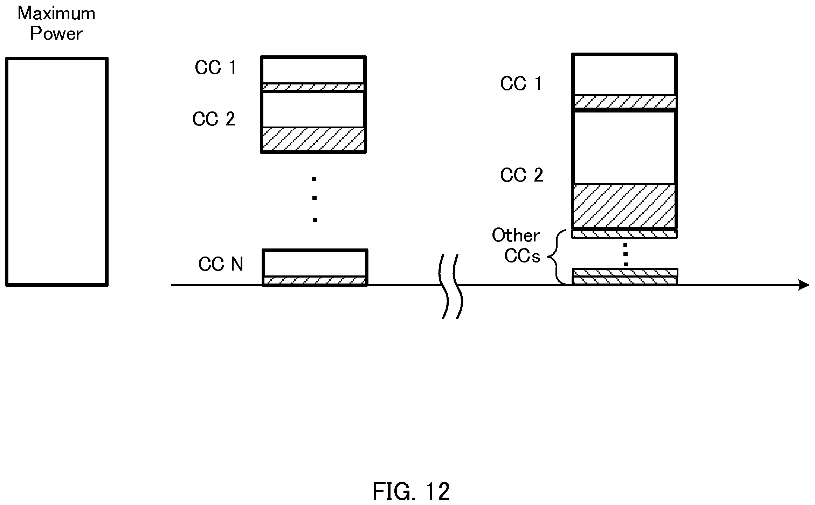

Now, the details of power allocation will be described with reference to FIG. 11 and FIG. 12. FIG. 11 is a diagram to explain the case where power is allocated equally between data signals and reference signals that are not included in DRSs, in all CCs that can be used in an unlicensed band, and FIG. 12 is a diagram to explain the case where power is allocated differently between data signals and reference signals that are not included in DRSs (where specific CCs are allocated greater power).

The blocks on the left and in the center part of FIG. 11 are the same as those in FIG. 9 described above, and therefore description will be omitted. When the number of CC is determined to be two (CC1 and CC2) based on listening, predetermined power is reserved for the reference signals (DRS) of the other CCs than CC1 and CC2 (hatched parts with forward slanting lines). The power that is left after subtracting the power allocated to the reference signals (DRSs) of the other CCs than CC1 and CC2 from the maximum transmission power is allocated to the reference signals (reference signals that are not included in DRSs) and data signals of CC1 and CC2. Note that, in the example illustrated in FIG. 11, the power to allocate to the data signals is configured to be equal between CC1 and CC2. Furthermore, the power to allocate to the reference signals not included in DRSs is configured to be equal between CC1 and CC2. Based on power allocation like this, burst transmission is made from radio base stations to user terminals.

In FIG. 11, the power to allocate to the reference signals not included in DRSs and the power to allocate to the data signals are configured to be equal between CCs. However, these allocations may be configured differently, for example, among a plurality of CCs. To be more specific, as illustrated in FIG. 12, CC2 alone may be configured to be allocated greater power than the other CCs. Such allocation may be applied when, for example, important data is transmitted in CC2. Note that, since FIG. 11 and FIG. 12 illustrate power allocation (power distribution) that presumes data transmission, the hatched parts with backward slanting lines represent the reference signals that are not included in DRSs. When DRSs are transmitted at periodic timings and multiplexed with data, after predetermined transmission power (predetermined power) is reserved for the maximum number (N) of DRSs, this transmission power is subtracted from the total transmission power, and the power that is left is allocated (distributed) to the reference signals that are not included in DRSs, and the data signals, of the CCs that are not used in burst transmission.

With this fourth example, <L1 signaling> and <CSI measurement>, which have been described above, are also the same as in the third example, and therefore description will be skipped. As described above, according to this fourth example, the power of DRSs for RRM measurements is fixed semi-statically, and, furthermore, the power of data signals transmitted via the PDSCH or reference signals that are not included in DRSs is changed dynamically, so that, when an LAA radio base station makes transmissions by using a plurality of unlicensed band component carriers, it is possible to manage predetermined transmission power efficiently. Furthermore, for potential DRS transmission, it is possible to reserve power for the CCs that are not used in burst transmission.

Next, listening carrier sensing according to the present embodiment will be described. With the present embodiment (the above first to the fourth example), it may be possible to control the threshold for listening carrier sensing (CCA threshold). It is possible to control the CCA threshold in association with the maximum transmission power ($P_H$). For example, the CCA threshold can be determined based on the following equation.

$$\text{CCA threshold} = -73 \text{ dBm/MHz} + (23 \text{ dBm} - P_H) / (1 \text{ MHz})$$

When the maximum transmission power is low, this CCA threshold becomes higher, and the interference control function is configured soft. This is because the maximum transmission power, when configured low, is likely to have little impact on the surroundings. On the other hand, when the maximum transmission power is configured high, the CCA threshold becomes lower, and the interference control function is configured to be stringent. This is because the maximum transmission power, when configured high, is likely to have an impact on the surroundings. When the CCA threshold is managed like this, the following two modes of control may be possible.

(Control 1)

A common CCA threshold may be applied to data transmission (PDSCH transmission) and burst transmission of DRSs. In this case, it is possible to determine the CCA threshold based on the constant power of DRSs or based on the maximum transmission power in the burst transmission immediately before (before listening).

(Control 2)

Different CCA thresholds may be applied between data transmission (PDSCH transmission) and burst transmission of DRSs. For example, the CCA threshold for DRSs is determined based on the constant power of DRSs, and the CCA threshold for the PDSCH is determined based on the maximum transmission power in the burst transmission immediately before (before listening).

(Structure of Radio Communication System)

Now, the structure of the radio communication system according to an embodiment of the present invention will be described below. In this radio communication system, the radio communication methods according to the embodiments of the present invention are employed. Note that the radio communication methods of the above-described example s may be applied individually or may be applied in combination.

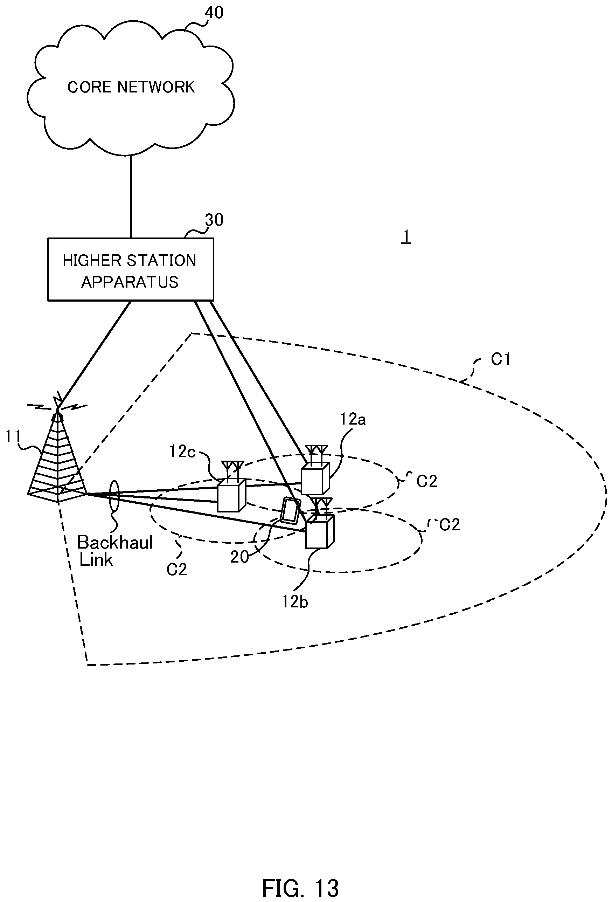

FIG. 13 is a diagram to illustrate an example of a schematic structure of a radio communication system according to an embodiment of the present invention. Note that the radio communication system illustrated in FIG. 7 is a system to incorporate, for example, an LTE system, super 3G, an LTE-A system and so on. In this radio communication system, carrier aggregation (CA) and/or dual connectivity (DC) to bundle multiple component carriers (CCs) into one can be used. Also, these multiple CCs include licensed band CCs to use licensed bands and unlicensed band CCs to use unlicensed bands. Note that this radio communication system may be referred to as "IMT-Advanced," or may be referred to as "4G," "5G," "FRA" (Future Radio Access) and so on.

The radio communication system 1 illustrated in FIG. 13 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

<Radio base station>

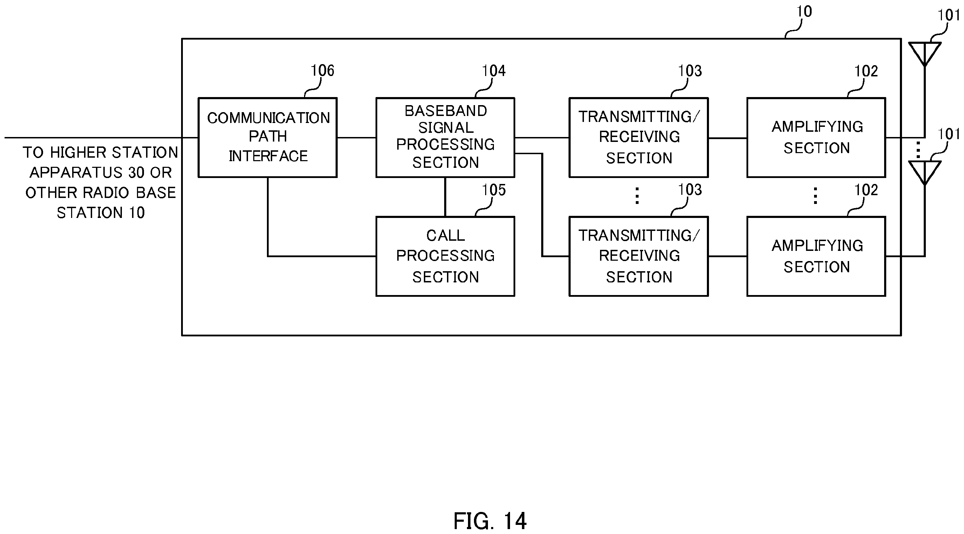

FIG. 14 is a diagram to illustrate an example of an overall structure of a radio base station according to an embodiment of the present invention. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

For example, the transmitting/receiving sections (transmitting sections) 103 can transmit discovery reference signals (DRSs), synchronization signals (PSS/SSS), cell-specific reference signals (CRSs), channel state information reference signals (CSI-RSs) and data signals based on the power allocation by the control section described below. Also, the transmitting/receiving sections 103 receive channel state information (CSI) in response to CSI-RSs and RRM measurement results in response to DRSs. Furthermore, when the result of DL-LBT that is executed before a DL signal is transmitted illustrates LBT-idle, the transmitting/receiving sections 103 can transmit the DL signal in an unlicensed band. Note that, for the transmitting/receiving sections 103, transmitters/receivers, transmitting/receiving circuits or transmitting/receiving devices that can be described based on common understanding of the technical field to which the present invention pertains can be used.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

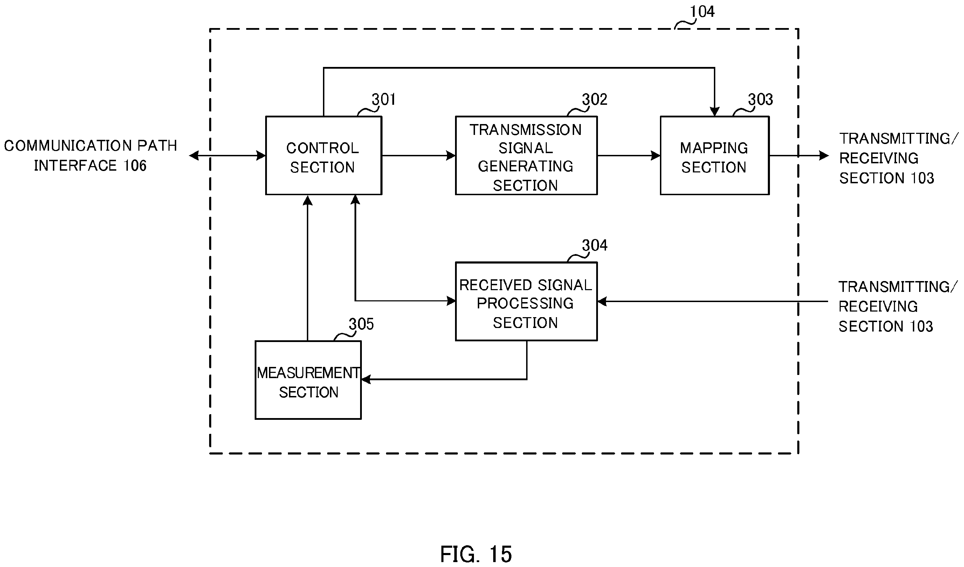

FIG. 15 is a diagram to illustrate an example of a functional structure of a radio base station according to the present embodiment. Note that, although FIG. 15 primarily illustrates functional blocks that pertain to characteristic parts of the present embodiment, the radio base station 10 has other functional blocks that are necessary for radio communication as well. As illustrated in FIG. 15, the baseband signal processing section 104 has a control section (scheduler) 301, a transmission signal generating section 302, a mapping section 303, a received signal processing section 304 and a measurement section 305.

The control section (scheduler) 301 controls the scheduling (for example, resource allocation) of downlink data signals that are transmitted in the PDSCH and downlink control signals that are communicated in the PDCCH and/or the EPDCCH. Furthermore, the control section (scheduler) 301 also controls the scheduling of system information, DRSs, synchronization signals (CSS/SSS), paging information, CRSs, CSI-RSs and so on.

Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on. Also, the control section 301 controls the transmission of each CC's downlink (DL) signals based on the result of listening in each CC. In this case, the control section 301 control the allocation of power based on the number of CCs that make transmission (are used for transmission of the DL signals) in each subframe after listening. Also, the control section 301 exerts control so that the power of data signals that is changed is reported, via L1 signaling, as amplitude information for identifying/decoding each symbol.

The control section 301 can allocate predetermined power to predetermined signals in CCs that make transmission in a subframe (FIG. 5, FIG. 6, FIG. 9 and FIG. 10), or, regardless of the number of transmitting CCs, allocate predetermined power to predetermined signals in a plurality of CCs that employ listening, in the subframe, (FIG. 7, FIG. 8, FIG. 11 and FIG. 12). Also, the control section 301 may allocate power so that, among CCs that make transmission in a subframe, the power to allocate to predetermined signals in a first CC and the power to allocate to predetermined signals in a second CCs are different (FIG. 6, FIG. 8, FIG. 10 and FIG. 12). While allocating power to these predetermined signals, the control section 301 also exerts control so that the total transmission power, which is provided for all of the CCs that execute listening, is allocated among the CCs that make transmission in the subframe, and DL signals are transmitted by using the total transmission power. Also, the predetermined signals may at least include DRSs, among discovery reference signals (DRSs), synchronization signals (PSS/SSS), cell-specific reference signals (CRSs), and channel state information reference signals (CSI-RSs). For the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Also, the transmission signal generating section 302 can include information about the LBT to apply to UL transmission, in DL signals transmitted in unlicensed bands. Also, the transmission signal generating section 302 can include information as to whether or not UL-LBT is applied, in UL grants. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301. For the received signal processing section 304, a signal processor/measurer, a signal processing/measurement circuit or a signal processing/measurement device that can be described based on common understanding of the technical field to which the present invention pertains can be used.

Also, by using the received signals, the measurement section 305 can measure the received power (for example, the RSRP (Reference Signal Received Power)), the received quality (for example, the RSRQ (Reference Signal Received Quality)), channel states (CSI) and so on. Also, upon listening before DL signal transmission in unlicensed bands, the measurement section 305 can measure the received power of signals transmitted from other systems and/or the like. The results of measurements in the measurement section 305 are output to the control section 301. The control section 301 can control the transmission of DL signals based on measurement results (listening results) in the measurement section 305.

Also, the measurement section 305 can adjust the channel state information (CSI) reports that are reported from the user terminals, according to the power that is allocated to signals other than the above predetermined signals by the control section 301. For example, the measurement section 305 adjusts or re-calculates the channel portion of CSI based on the power of data signals.

The measurement section 305 can be constituted by a measurer, a measurement circuit or a measurement device that can be described based on common understanding of the technical field to which the present invention pertains.

<User terminal>

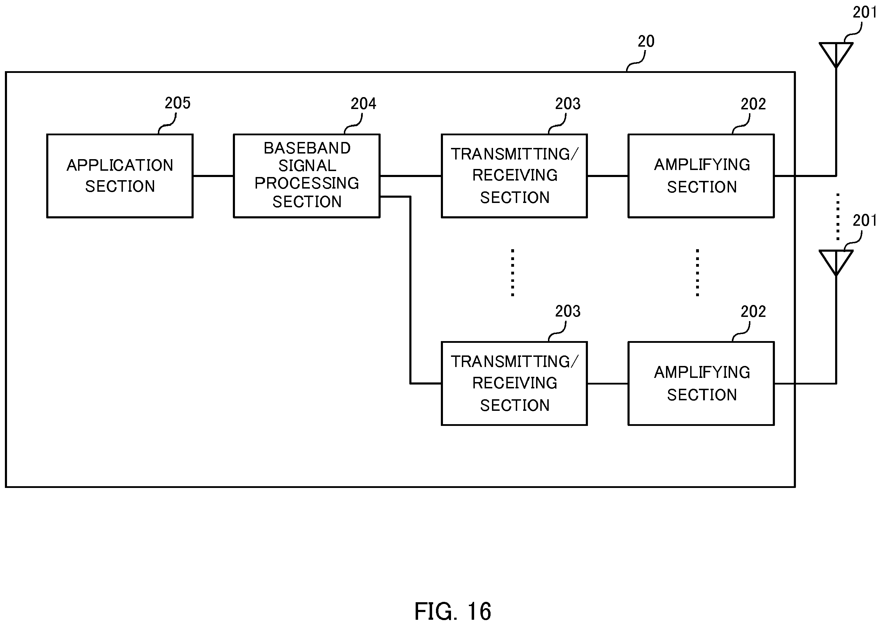

FIG. 16 is a diagram to illustrate an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections 203 can receive DRSs, synchronization signals (CSS/SSS), CRSs, CSI-RSs, data signals and so on, transmitted from the radio base station 10. Furthermore, the transmitting/receiving sections (receiving sections) 203 can receive various pieces of parameter information that are transmitted from the radio base station 10 via higher layer signaling. Also, the transmitting/receiving sections 203 acquire (receive) the changed power of data signals, as amplitude information for identifying/decoding each symbol, via L1 signaling.

Also, the transmitting/receiving sections 203 transmit CSI to the radio base station 10 based on CSI-RSs transmitted from the radio base station 10, transmit RRM measurement results to the radio base station 10 based on DRSs, and so on. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

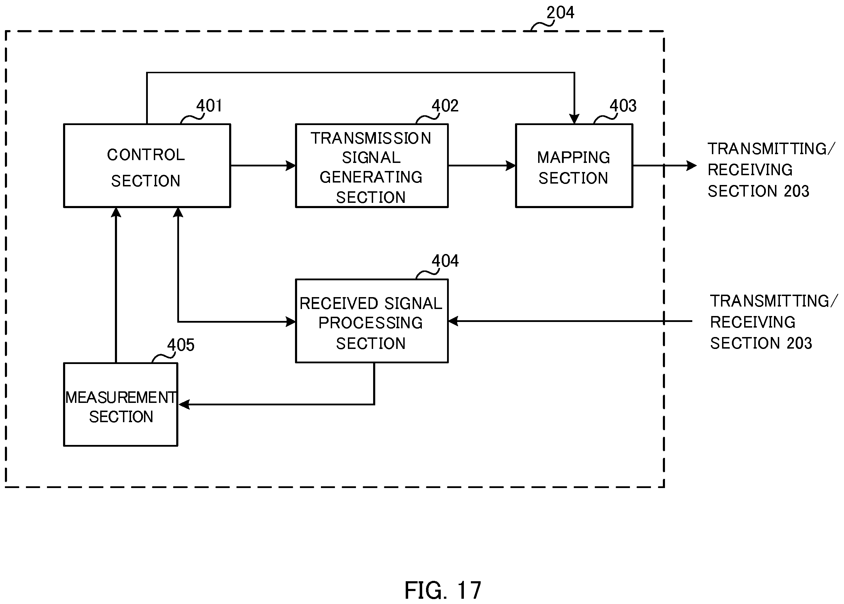

FIG. 17 is a diagram to illustrate an example of a functional structure of a user terminal according to the present embodiment. Note that, although FIG. 17 primarily illustrates functional blocks that pertain to characteristic parts of the present embodiment, the user terminal 20 has other functional blocks that are necessary for radio communication as well. As illustrated in FIG. 17, the baseband signal processing section 204 provided in the user terminal 20 has a control section 401, a transmission signal generating section 402, a mapping section 403, a received signal processing section 404 and a measurement section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission (UL transmission) of uplink control signals (for example, HARQ-ACKs and so on) and uplink data based on downlink control information (UL grants), the result of deciding whether or not retransmission control is necessary for downlink data, and so on. Also, the control section 401 controls the transmission of UL signals based on the result of listening (UL LBT).

The control section 401 controls CSI to be measured based on CSI-RSs transmitted from the radio base station 10, and channel information to be reported to the radio base station 10. When performing the demodulation process of DL signals, the control section 401 uses the power of data signals (power offset), which is reported as amplitude information for identifying/decoding each symbol.

Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the measurement section 405. Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section according to the present invention.

Also, the measurement section 405 measures channel states based on channel state information measurement reference signals transmitted from the radio base station 10. Also, the measurement section 405 may measure the received power (for example, the RSRP (Reference Signal Received Power)), the received quality (RSRQ (Reference Signal Received Quality)), channel states and so on. Furthermore, upon listening that is executed before UL signals are transmitted in unlicensed bands, the measurement section 405 can measure the received power of signals transmitted from other systems and so on. The results of measurements in the measurement section 405 are output to the control section 401. The control section 401 can control the transmission of UL signals based on measurement results (listening results) in the measurement section 405.

For example, in accordance with the first example described above, the measurement section 405 measures interference in each burst transmission (each subframe), and sends a CSI report that illustrates the measurement result, without measuring a measurement value that is averaged over a plurality of burst transmissions. Furthermore, in accordance with the third example described above, the measurement section 405 measures both the channel portion and the interference portion in each burst transmission (or in a single measurement resource), and sends a CSI report that illustrates the measurement results, without measuring a measurement value that is averaged over a plurality of burst transmissions (or over a plurality of resources).

The measurement section 405 can find an RRM measurement result based on a DRS, and transmit this to the radio base station. The measurement section 405 can be constituted by a measurer, a measurement circuit or a measurement device that can be described based on common understanding of the technical field to which the present invention pertains.

Note that the block diagrams that have been used to describe the above embodiments illustrate blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A radio base station (10, 11, 12) that communicates with a user terminal (20) by using a plurality of component carriers, CCs, in which listening is configured, the radio base station (10, 11, 12) comprising:

   a transmission section (103), configured to transmit downlink, DL, signals in each CC; and
   a control section (301), configured to control transmission of the DL signals in each CC based on a result of listening in the plurality of CCs,
   wherein the control section (301) is configured to control allocation of power based on the number of CCs that make transmission in each subframe after the listening, and
   the control section (301) is configured to report, via higher layer signaling, a power information about signals for radio resource measurements, RRM, according to the allocation of power, and to report, via L1 signaling, a power information about data signals according to the allocation of power.

2. The radio base station (10, 11, 12) according to claim 1, wherein, in the CCs that make transmission in each subframe after the listening, the control section (301) is configured to allocate constant power to signals for radio resource management, RRM, measurements.

3. The radio base station (10, 11, 12) according to claim 1, wherein, in a subframe after the listening, the control section (301) is configured to allocate constant power to signals for radio resource management, RRM, measurements in the plurality of CCs, regardless of the number of CCs that make transmission.

4. The radio base station (10, 11, 12) according to one of claim 1 to claim 3, wherein, among a discovery reference signal, DRS, a synchronization signal, PSS/SSS, a cell-specific reference signal, CRS, and a channel state information reference signal, CSI-RS, at least the DRS is included in the signals for RRM measurements.

5. A user terminal (20) that communicates with a radio base station (10, 11, 12) by using a plurality of component carriers, CCs, in which listening is configured, the user terminal (20) comprising:

   a receiving section (203), configured to receive downlink, DL, signals that are controlled based on a listening result in each CC; and
   a demodulation section (404), configured to demodulate the DL signals based on power information that is reported from the radio base station (10, 11, 12),
   wherein, in each subframe after the listening, power allocation for the DL signal is controlled based on the number of CCs that make transmission, and
   the receiving section (203) is further configured to receive, via higher layer signaling, a power information about signals for radio resource measurements, RRM, according to the power allocation, and to receive, via L1 signaling, a power information about data signals according to the power allocation.

6. A radio communication method for a radio base station (10, 11, 12) that communicates with a user terminal (20) by using a plurality of component carriers, CCs, in which listening is configured, the radio communication method comprising the steps of:

   controlling transmission of downlink, DL, signals in each CC based on a result of listening in the plurality of CCs; and
   transmitting the DL signals in each CC,
   wherein, in the control step, allocation of power is controlled based on the number of CCs that make transmission in each subframe after the listening,
   a power information about signals for radio resource measurements, RRM, is reported via higher layer signaling according to the allocation of power, and a power information about data signals is reported via L1 signaling according to the allocation of power.

## Patentansprüche

1. Funkbasisstation (10, 11, 12), die mit einem Benutzerendgerät (20) unter Verwendung einer Vielzahl von Komponententrägern, CCs, kommuniziert, in welchen Horchen konfiguriert ist, die Funkbasisstation (10, 11, 12) umfassend:

   einen Übertragungsabschnitt (103), der zum Übertragen von Downlink-Signalen, DL-Signalen, in jedem CC konfiguriert ist; und
   einen Steuerabschnitt (301), der zum Steuern einer Übertragung der DL-Signale in jedem CC basierend auf einem Ergebnis des Horchens in der Vielzahl von CCs konfiguriert ist,
   wobei der Steuerabschnitt (301) zum Steuern einer Zuordnung von Leistung basierend auf der Anzahl von CCs konfiguriert ist, die eine Übertragung in jedem Subrahmen nach dem Horchen vornehmen, und
   der Steuerabschnitt (301) dazu konfiguriert ist, über eine Signalisierung höherer Schicht eine Leistungsinformation über Signale für Funkressourcenmessungen, RRM, gemäß der Zuordnung von Leistung zu berichten und über eine L1-Signalisierung eine Leistungsinformation über Datensignale gemäß der Zuordnung von Leistung zu berichten.

2. Funkbasisstation (10, 11, 12) nach Anspruch 1, wobei in den CCs, die eine Übertragung in jedem Subrahmen nach dem Horchen vornehmen, der Steuerabschnitt (301) dazu konfiguriert ist, konstante Leistung zu Signalen für Messungen einer Funkressourcenverwaltung, RRM, zuzuordnen.

3. Funkbasisstation (10, 11, 12) nach Anspruch 1, wobei in einem Subrahmen nach dem Horchen der Steuerabschnitt (301) dazu konfiguriert ist, konstante Leistung zu Signalen für Messungen einer Funkressourcenverwaltung, RRM, in der Vielzahl von CCs unabhängig von der Anzahl von CCs, die eine Übertragung vornehmen, zuzuordnen.

4. Funkbasisstation (10, 11, 12) nach einem von Anspruch 1 bis Anspruch 3, wobei von einem Entdeckungsreferenzsignal, DRS, einem Synchronisierungssignal, PSS/SSS, einem zellspezifischen Referenzsignal, CRS, und einem Kanalzustandsinformationsreferenzsignal, CSI-RS, mindestens das DRS in den Signalen für RRM-Messungen beinhaltet ist.

5. Benutzerendgerät (20), das mit einer Funkbasisstation (10, 11, 12) unter Verwendung einer Vielzahl von Komponententrägern, CCs, kommuniziert, in welchen Horchen konfiguriert ist, das Benutzerendgerät (20) umfassend:

   einen Empfangsabschnitt (203), der dazu konfiguriert ist, Downlink-Signale, DL-Signale, zu empfangen, die basierend auf einem Horchergebnis in jedem CC gesteuert werden; und
   einen Demodulationsabschnitt (404), der dazu konfiguriert ist, die DL-Signale basierend auf Leistungsinformationen zu demodulieren, die von der Funkbasisstation (10, 11, 12) berichtet werden,
   wobei in jedem Subrahmen nach dem Horchen eine Leistungszuordnung für das DL-Signal basierend auf der Anzahl von CCs gesteuert wird, die eine Übertragung vornehmen, und
   der Empfangsabschnitt (203) weiter dazu konfiguriert ist, über eine Signalisierung höherer Schicht eine Leistungsinformation über Signale für Funkressourcenmessungen, RRM, gemäß der Leistungszuordnung zu empfangen und über eine L1-Signalisierung eine Leistungsinformation über Datensignale gemäß der Leistungszuordnung zu empfangen.

6. Funkkommunikationsverfahren für eine Funkbasisstation (10, 11, 12), die mit einem Benutzerendgerät (20) unter Verwendung einer Vielzahl von Komponententrägern, CCs, kommuniziert, in welchen Horchen konfiguriert ist, das Funkkommunikationsverfahren umfassend die Schritte:

   Steuern einer Übertragung von Downlink-Signalen, DL-Signalen, in jedem CC basierend auf einem Ergebnis des Horchens in der Vielzahl von CCs und
   Übertragen der DL-Signale in jedem CC,
   wobei im Steuerschritt eine Zuordnung von Leistung basierend auf der Anzahl von CCs, die eine Übertragung in jedem Subrahmen nach dem Horchen vornehmen, gesteuert wird,
   eine Leistungsinformation über Signale für Funkressourcenmessungen, RRM, über eine Signalisierung höherer Schicht gemäß der Zuordnung von Leistung berichtet wird und eine Leistungsinformation über Datensignale über eine L1-Signalisierung gemäß der Zuordnung von Leistung berichtet wird.

**Revendications**

1. Station de base radio (10, 11, 12) qui communique avec un terminal utilisateur (20) en utilisant une pluralité de porteuses composantes, CC, dans lesquelles une écoute est configurée, la station de base radio (10, 11, 12) comprenant :

   une section de transmission (103) configurée pour transmettre des signaux de liaison descendante, DL, dans chaque CC ; et
   une section de commande (301) configurée pour commander la transmission des signaux DL dans chaque CC sur la base d'un résultat d'écoute dans la pluralité de CC,
   dans laquelle la section de commande (301) est configurée pour commander une attribution de puissance sur la base du nombre de CC qui effectuent une transmission dans chaque sous-trame après l'écoute, et
   la section de commande (301) est configurée pour rapporter, via une signalisation de couche supérieure, une information de puissance concernant des signaux pour des mesures de ressources radio, RRM, en fonction de l'attribution de puissance, et pour rapporter, via une signalisation de L1, une information de puissance concernant des signaux de données en fonction de l'attribution de puissance.

2. Station de base radio (10, 11, 12) selon la revendication 1, dans laquelle, dans les CC qui effectuent une transmission dans chaque sous-trame après l'écoute, la section de commande (301) est configurée pour attribuer une puissance constante à des signaux pour des mesures de gestion de ressources radio, RRM.

3. Station de base radio (10, 11, 12) selon la revendication 1, dans laquelle, dans une sous-trame après l'écoute, la section de commande (301) est configurée pour attribuer une puissance constante à des signaux pour des mesures de gestion de ressources radio, RRM, dans la pluralité de CC, indépendamment du nombre de CC qui effectuent une transmission.

4. Station de base radio (10, 11, 12) selon une de la revendication 1 à la revendication 3, dans laquelle, parmi un signal de référence de découverte, DRS, un signal de synchronisation, PSS/SSS, un signal de référence spécifique à la cellule, CRS, et un signal de référence d'information d'état de canal, CSI-RS, au moins le DRS est inclus dans les signaux pour des mesures RRM.

5. Terminal utilisateur (20) qui communique avec une station de base radio (10, 11, 12) en utilisant une pluralité de porteuses composantes, CC, dans lesquelles une écoute est configurée, le terminal utilisateur (20) comprenant :

   une section de réception (203) configurée pour recevoir des signaux de liaison descendante, DL, qui sont commandés sur la base d'un résultat d'écoute dans chaque CC; et
   une section de démodulation (404) configurée pour démoduler les signaux DL sur la base d'informations de puissance qui sont rapportées à partir de la station de base radio (10, 11, 12),
   dans lequel, dans chaque sous-trame après l'écoute, une attribution de puissance pour le signal DL est commandée sur la base du nombre de CC qui effectuent une transmission, et
   la section de réception (203) est configurée en outre pour recevoir, via une signalisation de couche supérieure, une information de puissance concernant des signaux pour des mesures de ressources radio, RRM, en fonction de l'attribution de puissance, et pour recevoir, via une signalisation de L1, une information de puissance concernant des signaux de données en fonction de l'attribution de puissance.

6. Procédé de communication radio pour une station de base radio (10, 11, 12) qui communique avec un terminal utilisateur (20) en utilisant une pluralité de porteuses composantes, CC, dans lesquelles une écoute est configurée, le procédé de communication radio comprenant les étapes suivantes :

   la commande d'une transmission de signaux de liaison descendante, DL, dans chaque CC sur la base d'un résultat d'écoute dans la pluralité de CC ; et
   la transmission des signaux de DL dans chaque CC,
   dans lequel, dans l'étape de commande, une attribution de puissance est commandée sur la base du nombre de CC qui effectuent une transmission dans chaque sous-trame après l'écoute,
   une information de puissance concernant des signaux pour des mesures de ressources radio, RRM, est rapportée via une signalisation de couche supérieure en fonction de l'attribution de puissance, et une information de puissance concernant des signaux de données est rapportée via une signalisation de L1 en fonction de l'attribution de puissance.

EP 3 297 341 B1

## FIG. 1A

| ← 1 ms period → | ← Burst length ─ ─ ─ → |

| X | No transmission | O | Transmission | | |

↔
LBT
duration

↔
LBT
duration

↔
No LBT during burst

## FIG. 1B

| ← 1 ms period → | ← Burst length ─ ─ ─ → |

| X X X X  O | Transmission | |

↔
LBT and extended CCA

O : LBT−idle

X : LBT−busy

EP 3 297 341 B1

eNB

| LBT | DL Tx |

LBT IS NOT NEEDED

BURST PERIOD

| LBT | DL Tx |

LBT IS NOT NEEDED

BURST PERIOD

Time

FIG. 2

DMTC    B. DL DRS burst including RS for CSI measurement

A. Data burst including RS for CSI measurement

Time

FIG. 3

FIG. 4

Maximum
Power

CC 1
CC 2

CC N

CC 1

CC 2

Time

FIG. 5

EP 3 297 341 B1

FIG. 6

FIG. 7

Maximum
Power

CC 1

CC 2

CC N

Other
CCs

CC 1

CC 2

FIG. 8

Maximum Power

CC 1
CC 2

CC N

CC 1

CC 2

· · ·

Time

FIG. 9

Maximum
Power

CC 1

CC 2

CC N

CC 1

CC 2

FIG. 10

FIG. 11

Maximum
Power

CC 1

CC 2

CC N

CC 1

CC 2

Other
CCs

FIG. 12

FIG. 13

FIG. 14

FIG. 15

FIG. 16

EP 3 297 341 B1

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AT ; T.** Drivers, Benefits and Challenges for LTE in Unlicensed Spectrum. *3GPP TSG-RAN Meeting #62 RP-131701*

- **QUALCOMM INCORPORATED.** Multi-carrier operation for LAA. *3GPP TSG-RAN WG1#82 Rl-153875,* 15 August 2015, 2-4